# EUROPÄISCHE PATENTANMELDUNG

(11) **EP 1 394 519 A2**
(43) Veröffentlichungstag der Anmeldung: **03.03.2004**
(21) Anmeldenummer: 03015149.2
(22) Anmeldetag: 04.07.2003
(51) Int. Cl.: G01J 3/52

(54) **Verfahren zur Auswahl von ähnlichen Farben und entsprechendes Computersystem**

(30) Priorität: 11.07.2002 DE 10231335
(71) Anmelder: Bayer Aktiengesellschaft, 51368 Leverkusen (DE)
(72) Erfinder: Derr, Torsten, Dr., 41541 Dormagen (DE); Monnerjahn, Jürgen, Dr., 41468 Neuss (DE); Scheper, Ulrich, 41542 Dormagen (DE)

(57) **Zusammenfassung**

Die Erfindung betrifft ein Verfahren zur Auswahl von ähnlichen Farben mit folgenden Schritten:
- Eingabe von ersten Farbkoordinaten einer ersten Farbe,
- Auswahl von Farben mit zweiten Farbkoordinaten, die mit Bezug auf die ersten Farbkoordinaten ähnlich sind,
- Anzeige einer ersten Farbfläche für die erste Farbe auf einem Bildschirm,
- Anzeige von zweiten Farbflächen für die zweiten Farben auf dem Bildschirm,
- Selektion einer der zweiten Farbflächen,
- automatische Verschiebung der selektierten zweiten Farbfläche in einen Bereich der ersten Farbfläche zur Erzeugung einer Farbkante.

## Beschreibung

Die Erfindung betrifft ein Verfahren zur Auswahl von ähnlichen Farben sowie ein entsprechendes Computerprogrammprodukt und ein Computersystem.

Aus dem Stand der Technik ist es an sich bekannt, eine bestimmte Farbe mit einer Farbnummer eindeutig zu identifizieren. Eine solche Farbnummer dient dann beispielsweise für den Zugriff auf die entsprechende Farbe in einem Farbkatalog oder als Schlüssel für den Zugriff auf die die Farbe betreffende Informationen in einer Datenbank.

Bei diesen die Farbe betreffenden Informationen kann es sich beispielsweise um die Farbkoordinaten der Farbe handeln und/oder um weitere Informationen wie zum Beispiel Kundeninformationen, Informationen hinsichtlich der Herstellung, insbesondere betreffend die Compoundierung eines Polymers, um einen Kunststoff mit der gewünschten Farbe herzustellen.

Die Farbnummer ist dabei von den Farbkoordinaten der betreffenden Farbe verschieden: Die Farbnummer dient lediglich zu Identifizierung der Farbe in einer Menge von Farben, wohingegen die Farbkoordinaten die Lage einer Farbe in einem Farbraum angeben. Dabei kann beispielsweise das CIELAB oder ein anderes Farbkoordinatensystem zum Einsatz kommen.

Gerade bei Produkten aus Kunststoffen gibt es eine unübersehbare Anzahl von verschiedenen Farben. Dabei ist es besonders wichtig, dass ein bestimmtes Produkt immer dieselbe Farbe aufweist, um ein konsistentes Erscheinungsbild zu gewährleisten. Einer solchen Farbe eines bestimmten Produkts wird dazu eine Farbnummer zugeordnet.

Hierbei besteht das Problem, dass die Farbnummern herstellerspezifisch sind. Beispielsweise wird ein Kunde die Farbe eines neuen Produkts daher im Allgemeinen über die Farbkoordinaten des Produkts und nicht über eine herstellerabhängige Farbnummer spezifizieren. Alternativ wird der Kunde dem Hersteller ein Farbmuster mit der gewünschten Produktfarbe vorlegen. Mittels eines Farbmessgeräts können dann die Farbkoordinaten des Farbmusters bestimmt werden.

Aus dem Stand der Technik sind verschiedene Vorrichtungen zur Farbmessung bekannt. Aus der DE 196 44 616 A1 ist eine Farbmessvorrichtung bekannt, welche eine Lichtquelle und ein Fotoelement zum Empfang der von der Oberfläche der Probe diffus reflektierten Strahlung aufweist.

Aus der DE 196 44 617 A1 ist ein weiteres Verfahren und eine Vorrichtung zur Farbmessung bekannt. Dieses Verfahren dient zur Messung der Farbe einer in einem Behälter befindlichen Probe von körnigem oder granuliertem Gut durch Erfassung der Remission eines von dem Messkopf des Farbmessgeräts auf die Oberfläche der Probe ausgesandten Messstrahls.

Aus US-A 5 526 285, JP-A 0 90 333 49, JP-A 0 72 982 8 1, FR-A 27 08 105 sind verschiedene weitere Verfahren und Vorrichtungen zur Farbbestimmung bekannt. Farbmessvorrichtungen sind kommerziell z. B. von der Firma Dr. Bruno Lange GmbH, Königsweg 10, 14163 Berlin (www.drlange.de) erhältlich.

Aufgabe des Herstellers ist es, auf der Grundlage der Farbkoordinaten aus dem vorhandenen Produktsortiment eine möglichst der Vorgabe des Kunden ähnliche Typ-Farbe-Kombination auszuwählen. Hierzu wird im Allgemeinen auf eine Sammlung von Farbmustern oder auf einen Farbkatalog zugegriffen. Dies ist aufgrund der sehr großen Anzahl von verschiedenen Farben mit erheblichem Aufwand verbunden.

Ein ähnliches Problem tritt auch bei der Sortimentsoptimierung auf. Das Angebot eines komplexen Produktsortiments erfordert einen erheblichen logistischen Aufwand, der mit entsprechenden Kosten verbunden ist. Solche komplexen Produktsortimente gibt es in verschiedenen Wirtschaftsbereichen, insbesondere in der chemischen Industrie.

Aufgrund der großen Anzahl von Typ-Farbe-Kombinationen (TFK) von Kunststoffen hat man es in diesem Bereich mit besonders komplexen Produktsortimenten zu tun, wodurch hohe Komplexitätskosten verursacht werden. Um diese Komplexitätskosten zu reduzieren, wird ein optimiertes Sortiment angestrebt, um die Anzahl der Produktvarianten auf das notwendige Maß zu beschränken.

Zur Optimierung des Sortiments wird beispielsweise angestrebt, ähnliche Produkte, die fast dieselbe Farbe aufweisen, auf ein einheitliches Produkt umzustellen. Aufgrund der Vielzahl von Farben und Typ-Farbe-Kombinationen und der sich daraus ergebenden Vielzahl von Umstellungsmöglichkeiten ist auch eine solche Sortimentsbereinigung mit einem erheblichen Aufwand verbunden.

Der Erfindung liegt daher die Aufgabe zu Grunde ein verbessertes Verfahren zur Auswahl von ähnlichen Farben sowie ein entsprechendes Computerprogrammprodukt und Computersystem zu schaffen.

Die der Erfindung zu Grunde liegende Aufgabe wird jeweils mit den Merkmalen der unabhängigen Patentansprüche gelöst. Bevorzugte Ausführungsformen der Erfindung sind in den abhängigen Patentansprüchen angegeben.

Die Erfindung erlaubt computergestützt eine Vorauswahl von ähnlichen Farben zu treffen. Hierzu wird beispielsweise eine Farbe vorgegeben, für die ein oder mehrere möglichst ähnliche Farben ermittelt werden sollen. Bei dieser Farbe kann es sich um die Spezifikation eines neuen Kundenprodukts oder um ein Umstellungsziel für die Sortimentsoptimierung handeln.

Sowohl diese Farbe als auch ähnliche Farben aus dem Produktsortiment werden auf einem Bildschirm angezeigt. Eine präzise Farbdarstellung ist auf dem Bildschirm zwar technisch nur sehr eingeschränkt möglich, jedoch kann auf diese Art und Weise effizient eine Vorauswahl getroffen werden, um nicht alle Farbmuster der in Frage kommenden ähnlichen Farben mit der spezifizierten Farbe vergleichen zu müssen.

Insbesondere erübrigt sich ein solcher unmittelbarer Vergleich der Farbmuster für solche Farben, bei denen bereits die Darstellung auf dem Bildschirm ergibt, dass sie nicht hinreichend ähnlich sind. Nur für solche Farben, die auf der Bildschirmdarstellung als hinreichend ähnlich erscheinen, greift der Benutzer auf Farbmuster zu, um diese unmittelbar miteinander zu vergleichen. Durch die computergestützte Vorauswahl ist eine erhebliche Zeit- und Kosteneinsparung erreichbar.

Besonders vorteilhaft ist hierbei, dass einzelne Farbflächen auf dem Bildschirm in dem Bereich der spezifizierten Farbe verschiebbar sind, um eine Farbkante zu erzeugen. Eine solche Farbkante bietet für den Benutzer die Möglichkeit unmittelbar den Kontrast der Farben wahrzunehmen, um so zu seiner Entscheidung zu gelangen, ob die Farben hinreichend ähnlich sind oder nicht.

Nach einer bevorzugten Ausführungsform der Erfindung wird die spezifizierte Farbe in einem zentralen Bereich eines Anzeigefensters in einer entsprechenden Farbfläche dargestellt. In einem peripheren Bereich um diese Farbfläche werden weitere Farbflächen mit ähnlichen Farben angezeigt. Der Benutzer kann beispielsweise über eine graphische Benutzerschnittstelle einzelne der Farbflächen in dem peripheren Bereich selektieren, so dass diese automatisch über die zentrale Farbfläche der spezifizierten Farben geschoben werden. Hierdurch entstehen entsprechende Farbkanten für den unmittelbaren Vergleich der Farben.

Nach einer weiteren bevorzugten Ausführungsform der Erfindung wird für die Eingabe von Farbkoordinaten und für die Auswahl von ähnlichen Farben ein dreidimensionales Farbkoordinatensystem, wie zum Beispiel das LAB-System verwendet. Dagegen wird für die Anzeige der entsprechenden Farben auf dem Bildschirm ein anderes Farbkoordinatensystem, wie zum Beispiel das RGB-System verwendet. Für die Anzeige auf dem Bildschirm müssen daher die LAB Farbkoordinaten in das RGB Farbkoordinatensystem umgesetzt werden. Verfahren zur Transformierung von Farbkoordinaten zwischen verschiedenen Farbkoordinatensystemen sind an sich zum Beispiel aus US 6 108 442 und US 6 137 596 bekannt.

Nach einer weiteren bevorzugten Ausführungsform der Erfindung wird für die Auswahl von ähnlichen Farben ein Ähnlichkeitsmaß verwendet. Als Ähnlichkeitsmaß dient vorzugsweise der euklidische Abstand zwischen den Farbkoordinaten in dem Farbraum. Daneben können in das Ähnlichkeitsmaß auch weitere Produkteigenschaften mit eingehen.

Im Weiteren werden bevorzugte Ausführungsformen der Erfindung mit Bezugnahme auf die Zeichnungen näher erläutert. Es zeigen:
- Figur 1: ein Flussdiagramm einer ersten Ausführungsform eines erfindungsgemäßen Verfahrens,
- Figur 2: ein Blockdiagramm einer Ausführungsform eines erfindungsgemäßen Computersystems,
- Figur 3: eine schematische Darstellung der Datenbank des Computersystems der Figur 2,
- Figur 4: ein Flussdiagramm einer Ausführungsform für die Sortimentsoptimierung,
- Figur 5: eine Ausführungsform einer erfindungsgemäßen graphischen Benutzerschnittstelle.

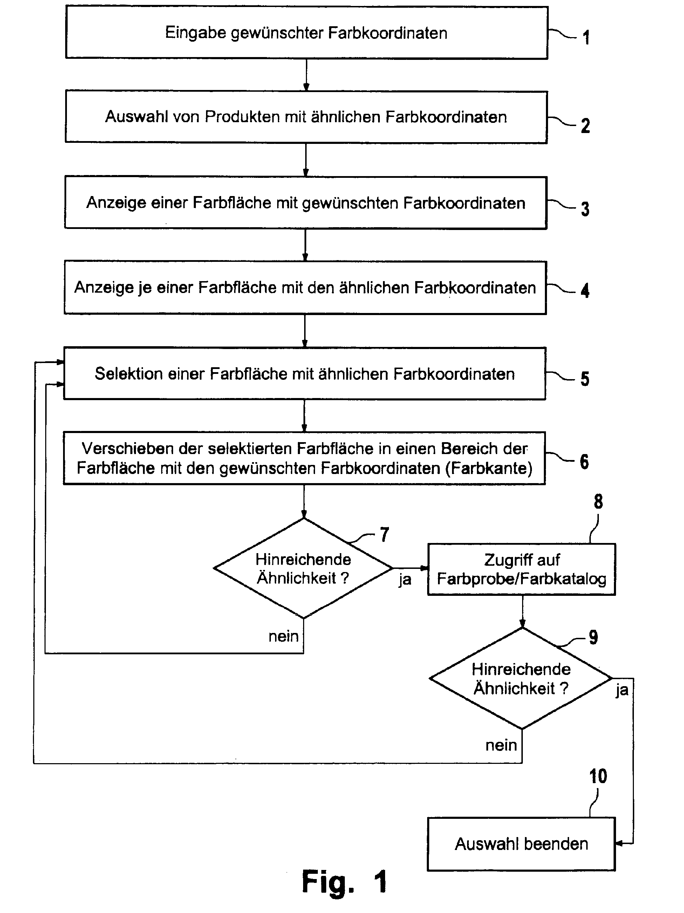

Die Figur 1 zeigt ein Flussdiagramm eines Verfahrens für die Auswahl von ähnlichen Farben. In dem Schritt 1 erfolgt die Eingabe der Farbkoordinaten einer gewünschten Farbe. Hierbei kann es sich beispielsweise um die Farbkoordinaten eines Farbmusters handeln, welche ein Kunde zur Spezifizierung der Farbe eines neuen Produkts vorgelegt hat. Die Aufgabenstellung ist dann, Produkte mit möglichst ähnlichen Farben aus dem Sortiment des Herstellers zur ermitteln.

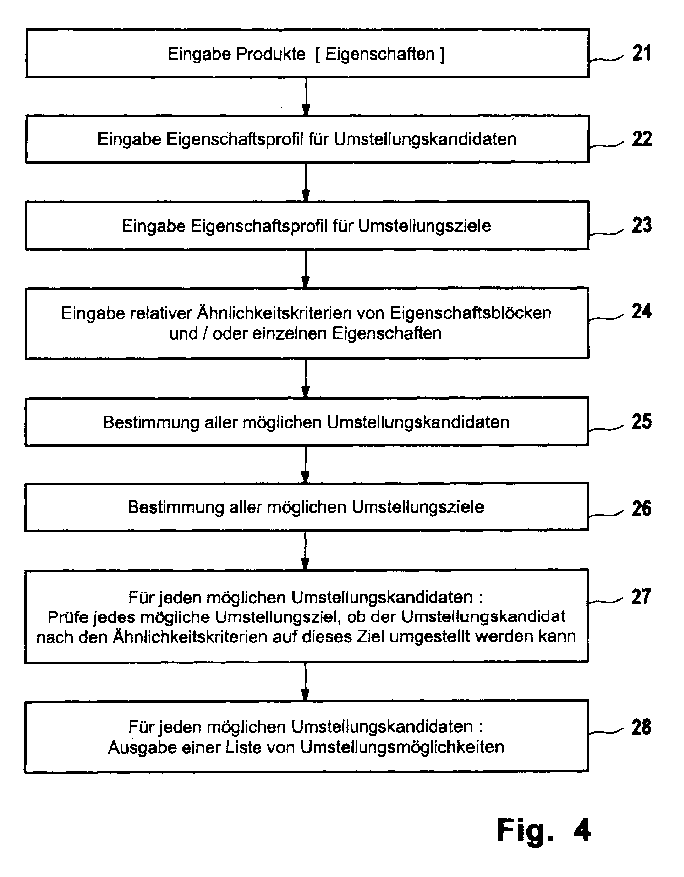

Ein anderer Anwendungsfall ist die Sortimentsoptimierung. In diesem Fall werden als die gewünschten Farbkoordinaten die Farbkoordinaten des Umstellungskandidaten eingegeben. Dieser soll dann mit verschiedenen möglichen Umstellungszielen ähnlicher Farben verglichen werden. Die Generierung solcher Umstellungskandidaten und Umstellungsziele wird weiter unten mit Bezugnahme auf die Figur 4 näher erläutert werden.

In dem Schritt 2 erfolgt eine Auswahl von Produkten mit ähnlichen Farbkoordinaten. Dies kann so erfolgen, dass auf eine Datenbank des Herstellers mit Produktinformationen zugegriffen wird. Diese Datenbank beinhaltet auch die Farbkoordinaten der jeweiligen Produkte. In dieser Datenbank werden dann Produkte gesucht, die einen Farbabstand zu den gewünschten Farbkoordinaten haben, der kleiner ist als ein vorgegebener Schwellwert. Als Farbabstand kann der euklidische Abstand der Farbkoordinaten in dem Farbkoordinatensystem verwendet werden. Neben den Farbkoordinaten können auch weitere Produkteigenschaften mit für die Auswahl herangezogen werden. Dies ist insbesondere bei der Sortimentsoptimierung der Fall.

In dem Schritt 3 wird eine Farbfläche mit den gewünschten Farbkoordinaten auf einem Bildschirm angezeigt. Hierfür ist es unter Umständen erforderlich, dass die Farbkoordinaten zunächst in ein von dem betreffenden Computersystem verwendetes Farbkoordinatensystem umgesetzt werden. Entsprechend werden auch für die in dem Schritt 2 ermittelten ähnlichen Farbkoordinaten Farbflächen auf dem Bildschirm in dem Schritt 4 angezeigt.

In dem Schritt 5 selektiert der Benutzer eine der Farbflächen mit ähnlichen Farbkoordinaten zum Beispiel über eine graphische Benutzerschnittstelle durch Anklicken mit der Computer-Maus. Die selektierte Farbfläche wird daraufhin über die Farbfläche mit den gewünschten Farbkoordinaten "geschoben", so dass eine Farbkante entsteht. Aufgrund dieser Farbkante kann der Benutzer in dem Schritt 7 besonders gut beurteilen, ob die Vergleichsfarben hinreichend ähnlich sind oder nicht.

Wenn der Benutzer zu dem Ergebnis kommt, dass keine hinreichende Ähnlichkeit vorliegt, so geht er zurück zu dem Schritt 5, um eine weitere Farbfläche mit ähnlichen Farbkoordinaten zu selektieren. Stellt der Benutzer jedoch eine hinreichende Ähnlichkeit fest, so greift er in dem Schritt 8 auf ein Farbmuster oder eine Farbprobe zu. Dieser Zugriff kann automatisch oder manuell erfolgen.

Der Benutzer kann dann unmittelbar ein Farbmuster der Farbe mit den gewünschten Farbkoordinaten mit einem Farbmuster der in dem Schritt 5 selektierten ähnlichen Farbe vergleichen. Vorzugsweise erfolgt dieser unmittelbare visuelle Vergleich unter einem Normlicht-Gerät in dem Schritt 9.

Wird durch den Benutzer festgestellt, dass aufgrund des unmittelbaren visuellen Vergleichs doch keine hinreichende Ähnlichkeit vorliegt, so wird der Schritt 5 erneut durchgeführt, um eine weitere Farbe zu selektieren. Wenn jedoch auch der unmittelbare visuelle Vergleich eine hinreichende Ähnlichkeit ergibt, so kann die Auswahl in dem Schritt 10 beendet werden.

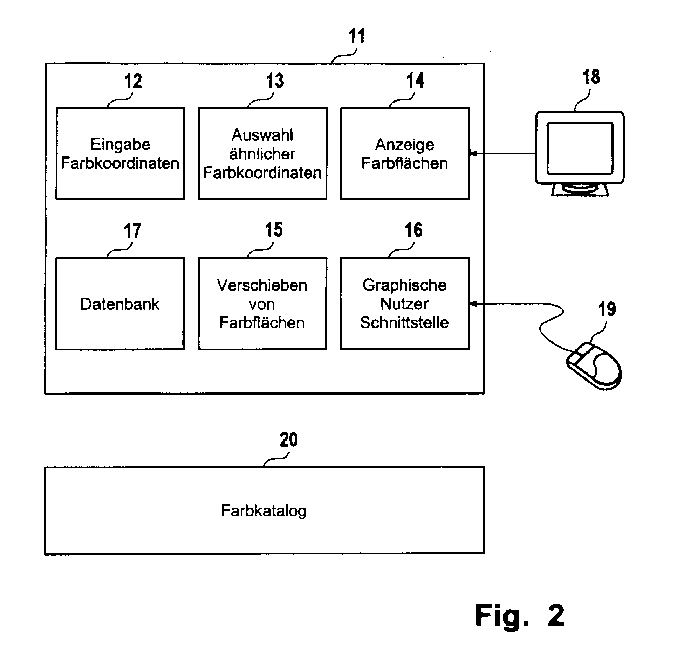

Die Figur 2 zeigt ein Blockdiagramm eines entsprechenden Computersystems 11. Bei dem Computersystem 11 kann es sich um einen handelsüblichen Personal Computer handeln. Das Computersystem 11 beinhaltet ein Programmmodul 12 zur Eingabe von Farbkoordinaten (vgl. Schritt 1 der Figur 1), ein Programmmodul 13 zur Auswahl ähnlicher Farbkoordinaten (vgl. Schritt 2 der Figur 1) ein Programmmodul 14 für die Anzeige von Farbflächen (vgl. Schritte 3 und 4 der Figur 1) sowie ein Programmmodul 15 für das Verschieben von selektierten Farbflächen (vgl. Schritt 6 der Figur 1). Das Computersystem 11 hat eine graphische Nutzerschnittstelle 16 sowie eine Datenbank 17. Die Datenbank 17 kann auch auf einem anderen Computer, zum Beispiel einem Datenbank-Servercomputer, vorhanden sein; in diesem Fall hat das Computersystem 11 eine entsprechende Verbindung zu der externen Datenbank.

Das Computersystem 11 hat ferner einen Bildschirm 18 sowie eine Computer-Mausl9.

Ferner ist ein Farbkatalog 20 mit Farbmustern des Herstellersortiments vorhanden. Auf diesen Farbkatalog 20 wird entweder manuell durch den Benutzer oder automatisch von dem Computersystem 11 zugegriffen; im letzteren Fall nimmt das Computersystem 11 dem Benutzer das manuelle Suchen eines gewünschten Farbmusters in dem Farbkatalog 20 ab.

Beim Betrieb des Computersystems 11 werden zunächst die gewünschten Farbkoordinaten über das Programmmodul 12 eingegeben. Danach werden mittels des Programmmoduls 13 Produkte mit ähnlichen Farbkoordinaten aus der Datenbank 17 ermittelt.

Das Programmmodul 14 generiert dann eine Ausgabe mit Farbflächen für die Farbe mit den gewünschten Farbkoordinaten sowie Farbflächen für die Farben mit den durch das Programmmodul 13 ermittelten ähnlichen Farbkoordinaten. Diese Farbflächen werden auf dem Bildschirm 18 dargestellt.

Der Benutzer kann auf diese Farbflächen über die graphische Nutzerschnittstelle 16 zum Beispiel mittels der Computer-Maus 19 zugreifen. Selektiert der Benutzer eine der Farbflächen zum Beispiel durch Anklicken mittels der Computer-Maus 19, so wird diese mittels des Programmmoduls 15 automatisch über die Farbfläche der Farbe mit den gewünschten Farbkoordinaten verschoben, so dass eine Farbkante für den Vergleich der Farben auf dem Bildschirm 18 entsteht.

Wenn der Benutzer eine hinreichende Ähnlichkeit der auf dem Bildschirm angezeigten Farben feststellt, so kann er je nach Ausführungsform entweder manuell auf den Farbkatalog 20 zugreifen, um das entsprechende Farbmuster manuell herauszusuchen oder dieser Zugriff auf den Farbkatalog 20 erfolgt automatisch seitens des Computersystems 11, nachdem der Benutzer eine entsprechende Anforderung in das Computersystem eingegeben hat.

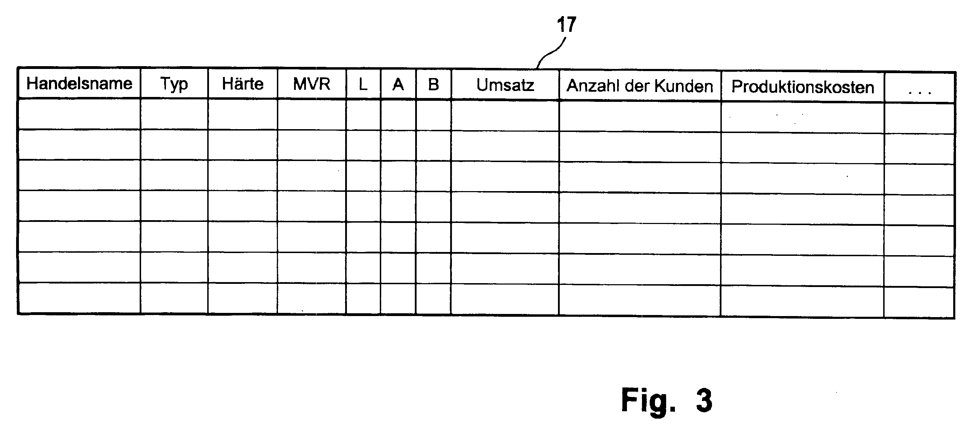

Die Figur 3 zeigt eine Ausführungsform der Datenbank 17 zur Speicherung eines Produktsortiments.

Jede Zeile in der Datenbank 17 bezieht sich auf ein Produkt des Sortiments, welches durch seine Produktbezeichnung wie z.B. seinen Handelsnamen gekennzeichnet ist. Eine oder mehrere der Eigenschaften des Produkts mit dem Handelsnamen werden in der betreffenden Zeile des Datenbankeintrags der Datenbank 17 gespeichert.

Bei diesen Eigenschaften kann es sich beispielsweise um mechanische Eigenschaften des Produkts, Verarbeitungseigenschaften und Verarbeitungsparameter des Produkts sowie um kommerzielle Eigenschaften handeln. Beispiele für die mechanischen Eigenschaften sind ISO-ak (Kerbschlagzähigkeit) und Härte. Beispiele für die verarbeitungsbezogenen Eigenschaften sind MVR (Fliessfähigkeit), Vicat (Wärmeformbeständigkeit) und die Schwindung. Beispiele für kommerzielle Eigenschaften des Produkts sind das Absatzvolumen, der Umsatz, die Anzahl der Kunden sowie die Herstellkosten.

Eine besonders wichtige Eigenschaft eines Handelsproduktes ist dessen Farbe. Zur Angabe der Farbe dienen die Koordinaten der Farbe des Kunststoffs in einem Farbraum. Hierfür können beispielsweise die LAB-Koordinaten des CIELAB-Farbraums benutzt werden. Hinsichtlich der Farbe ist weiterhin die Angabe einer Farbnummer, von Farbtoleranzen sowie gegebenenfalls von Remissionskurven vorteilhaft.

Des weiteren beinhaltet die Datenbank 17 zu jedem Produkt neben dem Handelsnamen den Typ. Die Typangabe kennzeichnet bestimmte besondere Eigenschaften des betreffenden Handelsprodukts. Bei den Typen unterscheidet man beispielsweise zwischen Eigenschaften "gut fließend", "wärmestabilisiert", "mittelviskos", "zusätzlich nukleiert", "witterungsstabilisiert", "höherviskos", "Glasfaseranteil", "flammgeschützt" etc.

Aufgrund der vielen Variationsmöglichkeiten, insbesondere der Typ-Farbe-Kombinationen, kann die Datenbank 17 eines Kunststoffproduktsortiments mehrere hundert bis mehrere tausend unterschiedliche Produkte beinhalten.

Die Figur 4 zeigt die Ermittlung von Umstellungskandidaten und Umstellungsmöglichkeiten für die Sortimentsbereinigung, beispielsweise eines Kunststoffproduktsortiments, wie es in der Datenbank 17 in der Figur 3 gespeichert ist.

In dem Schritt 21 erfolgt die Eingabe der Produkte des Produktsortiments mit den den Produkten zugeordneten Eigenschaften. Auf diese Art und Weise entsteht eine Datenbank, beispielsweise in Form der Datenbank 17 der Figur 3.

In dem Schritt 22 erfolgt die Eingabe eines Eigenschaftsprofils für Umstellungskandidaten. Als "Umstellungskandidat" wird im Weiteren ein Produkt bezeichnet, welches für die Sortimentsbereinigung, das heißt, die Umstellung auf ein anderes Produkt in Frage kommt. Um überhaupt als Umstellungskandidat in Betracht gezogen zu werden, muss das betreffende Produkt ein durch den Benutzer definierbares Eigenschaftsprofil erfüllen. Ein solches Eigenschaftsprofil kann aus einer oder mehreren Eigenschaften bestehen.

In dem Schritt 23 erfolgt die Eingabe eines Eigenschaftsprofils für Umstellungsziele. Als "Umstellungsziel" wird hier ein Produkt des Produktsortiments bezeichnet, welches als Ersatz für einen Umstellungskandidaten in Frage kommt. Ein Umstellungsziel ist also ein Produkt, welches ein oder mehrere der Produkte des Sortiments ersetzen kann, da es zu diesen Produkten hinreichend ähnlich ist.

Um überhaupt als Umstellungsziel in Betracht gezogen zu werden, ist es erforderlich, dass das betreffende Produkt ein bestimmtes Eigenschaftsprofil erfüllt. Dieses Eigenschaftsprofil ist vom Benutzer definierbar und beinhaltet eine oder mehrere Eigenschaften, die das Produkt erfüllen muss, um als Umstellungsziel klassifiziert zu werden.

In dem Schritt 24 werden relative Ähnlichkeitskriterien zwischen Eigenschaftsblöcken oder einzelnen Eigenschaften eingegeben, die erfüllt sein müssen, damit ein Umstellungskandidat als zu einem Umstellungsziel hinreichend ähnlich eingestuft wird. Die Eigenschaftsblöcke fassen mehrere Eigenschaften zusammen, wie zum Beispiel die Farbkoordinaten oder andere Eigenschaften, die zu einer gemeinsamen Kategorie gehören.

In dem Schritt 25 wird eine Datenbanksuche in der Datenbank 17 (vgl. Figur 3) mit dem Eigenschaftsprofil des Schritts 22 als Suchkriterium gestartet, um alle möglichen Umstellungskandidaten der Datenbank 17 zu ermitteln, welche dem Eigenschaftsprofil entsprechen. In dem Schritt 26 wird eine Suche nach den Umstellungszielen in der Datenbank 17 vorgenommen, wobei das Eigenschaftsprofil des Schritts 23 als Suchparameter verwendet wird.

In dem Schritt 27 wird für einen der Umstellungskandidaten geprüft, ob eines der Umstellungsziele, die in dem Schritt 26 ermittelt worden sind, die Ähnlichkeitskriterien des Schritts 24 erfüllt. Wenn dies der Fall ist, handelt es sich bei dem betreffenden Umstellungsziel um eine tatsächliche Umstellungsmöglichkeit.

Diese Prüfung wird hinsichtlich dieses Umstellungskandidaten für jedes Umstellungsziel wiederholt, um so gegebenenfalls zu einer Anzahl von Umstellungsmöglichkeiten für den Umstellungskandidaten zu kommen. Der Schritt 27 wird mit Bezug auf jeden der in dem Schritt 25 ermittelten Umstellungskandidaten durchgeführt, um so für jeden Umstellungskandidaten zu keiner, einer oder mehreren Umstellungsmöglichkeiten zu kommen.

Diese Umstellungsmöglichkeiten werden beispielsweise in Form einer Liste für jeden Umstellungskandidaten ausgegeben. Vorzugsweise beinhalten diese Listen auch die relevanten Eigenschaften der Umstellungsmöglichkeiten, um eine Auswahl aus der Liste für eine Umstellung des Umstellungskandidaten auf ein Produkt der Liste von Umstellungsmöglichkeiten auszuwählen.

Diese Ergebnisse werden dann als Grundlage für die Sortimentsbereinigung verwendet, indem die Farbkoordinaten des Umstellungskandidaten als gewünschte Farbkoordinaten eingegeben werden (vgl. Schritt 1 der Figur 1) und die Farbkoordinaten der Umstellungsmöglichkeiten als die Auswahl von Produkten mit ähnlichen Farbkoordinaten in dem Schritt 2 (vgl. Figur 1) eingegeben wird.

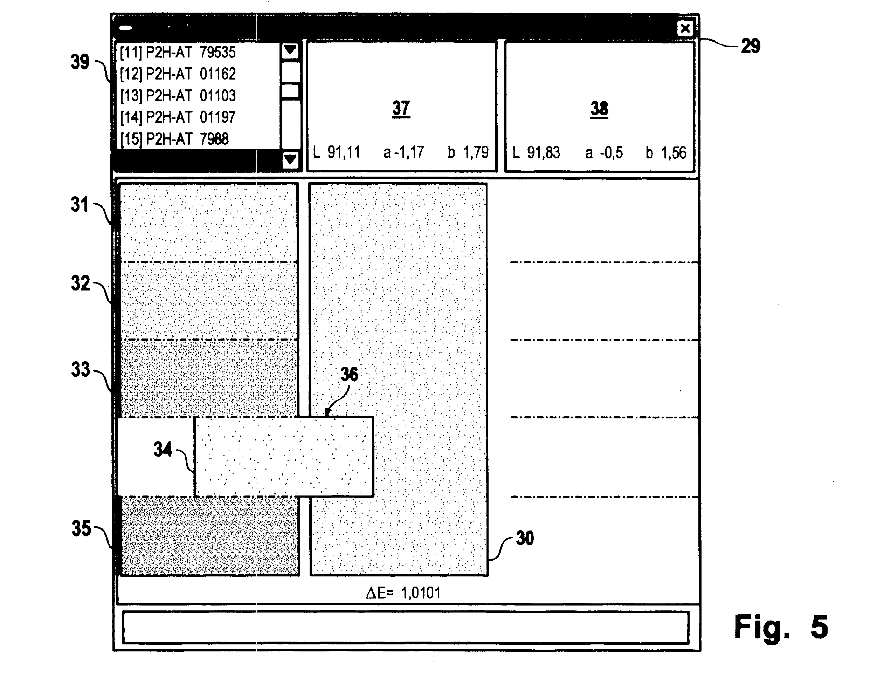

Ein Beispiel für die Darstellung der verschiedenen Farbflächen auf dem Bildschirm 18 zeigt die Figur 5.

Auf dem Bildschirm (vgl. Bildschirm 18 der Figur 2) wird ein Fenster 29 angezeigt. In einem zentralen Bereich des Fensters 29 wird eine Farbfläche 30 angezeigt, die den gewünschten Farbkoordinaten entspricht, das heißt je nach Anwendungsfall der vom Kunden gewünschten Farbe bzw. dem Umstellungskandidaten für die Sortimentsoptimierung.

Um die Peripherie der Farbfläche 30 werden weitere Farbflächen 31 bis 35 angezeigt, die jeweils einer Farbe mit zu der Farbe der Farbfläche 30 ähnlichen Farbkoordinaten entsprechen. Durch Anklicken einer der Farbflächen 31 bis 35 kann der Benutzer eine ähnliche Farbe selektieren.

Diese wird dann aus ihrer Grundposition auf die Farbfläche 30 hin verschoben, so dass eine Farbkante entsteht. Selektiert der Benutzer beispielsweise die Farbfläche 34, so wird diese auf die Farbfläche 30 verschoben, so wie es in der Figur 5 beispielhaft gezeigt ist. Hierdurch entsteht eine Farbkante 36 zwischen den Farbflächen 34 und 30.

In einem Anzeigebereich 37 des Fensters 29 werden die Farbkoordinaten der Farbfläche 30 angezeigt; in einem Anzeigebereich 38 werden ferner die Farbkoordinaten der selektierten Farbfläche - in dem gezeigten Beispielsfall der Farbfläche 34 - angezeigt. Ferner wird auch die euklidische Distanz Δ E zwischen den Farbkoordinaten der Farbfläche 30 und den Farbkoordinaten der selektierten Farbfläche, das heißt der Farbfläche 34 und der Farbfläche 30 angezeigt. Darüber hinaus werden in dem Anzeigebereich 39 des Fensters 29 die Produktkennungen der Vergleichsprodukte angezeigt.

### Bezugszeichenliste

- Computersystem: 11
- Programmmodul: 12
- Programmmodul: 13
- Programmmodul: 14
- Programmmodul: 15
- Graphische Nutzerschnittstelle: 16
- Datenbank: 17
- Bildschirm: 18
- Computer-Maus: 19
- Farbkatalog: 20
- Fenster: 29
- Farbfläche: 30
- Farbfläche: 31
- Farbfläche: 32
- Farbfläche: 33
- Farbfläche: 34
- Farbfläche: 35
- Farbkante: 36
- Anzeigebereich: 37
- Anzeigebereich: 38
- Anzeigebereich: 39

## Patentansprüche

1. Verfahren zur Auswahl von ähnlichen Farben mit folgenden Schritten:
- Eingabe von ersten Farbkoordinaten einer ersten Farbe,
- Auswahl von Farben mit zweiten Farbkoordinaten, die mit Bezug auf die ersten Farbkoordinaten ähnlich sind,
- Anzeige einer ersten Farbfläche für die erste Farbe auf einem Bildschirm,
- Anzeige von zweiten Farbflächen für die zweiten Farben auf dem Bildschirm,
- Selektion einer der zweiten Farbflächen,
- Verschiebung der selektierten zweiten Farbfläche in einen Bereich der ersten Farbfläche zur Erzeugung einer Farbkante.

2. Verfahren nach Anspruch 1, wobei die erste Farbfläche in einem zentralen Bereich eines Anzeigefensters angezeigt wird und wobei die zweiten Farbflächen in einem peripheren Bereich um die erste Farbfläche angezeigt werden.

3. Verfahren nach Anspruch 1 oder 2, wobei die ersten und zweiten Farbkoordinaten zu einem ersten Farbkoordinatensystem gehören und die Anzeige der ersten und zweiten Farbflächen auf dem Bildschirm auf einem zweiten Farbkoordinatensystem basiert und die ersten und zweiten Farbkoordinaten des ersten Farbkoordinatensystems in entsprechende erste und zweite Farbkoordinaten des zweiten Farbkoordinatensystems umgesetzt werden.

4. Verfahren nach Anspruch 3, wobei es sich bei dem ersten Farbkoordinatensystem um das CIELAB-Koordinatensystem und bei dem zweiten Farbkoordinatensystem um das RGB-System handelt

5. Verfahren nach einem der vorhergehenden Ansprüche 1 bis 4, wobei die Auswahl von zweiten Farben mit zweiten Farbkoordinaten, die mit Bezug auf die ersten Farbkoordinaten ähnlich sind, basierend auf einem Ahnlichkeitsmaß erfolgt, welches mit einem vorgegebenen Schwellwert verglichen wird.

6. Verfahren nach Anspruch 5, wobei als Ähnlichkeitsmaß ein euklidischer Abstand zwischen den ersten und zweiten Farbkoordinaten in dem ersten Farbkoordinatensystem verwendet wird.

7. Verfahren nach Anspruch 5 oder 6, wobei das Ähnlichkeitsmaß neben dem Abstand der Farbkoordinaten weitere Produkteigenschaften umfasst.

8. Verfahren nach einem der vorhergehenden Ansprüche 1 bis 7, wobei die Selektion einer zweiten Farbfläche über eine graphische Benutzerschnittstelle erfolgt.

9. Verfahren nach einem der vorhergehenden Ansprüche 1 bis 8, wobei ein Zugriff auf ein Farbmuster einer vom Nutzer als hinreichend ähnlich bewerteten zweiten Farbe erfolgt, um das Farbmuster mit einem Farbmuster der ersten Farbe unmittelbar zu vergleichen.

10. Computerprogrammprodukt mit Programmmitteln zur Durchführung der folgenden Schritte:
- Eingabe von ersten Farbkoordinaten einer ersten Farbe,
- Auswahl von Farben mit zweiten Farbkoordinaten, die mit Bezug auf die ersten Farbkoordinaten ähnlich sind,
- Anzeige einer ersten Farbfläche für die erste Farbe auf einem Bildschirm,
- Anzeige von zweiten Farbflächen für die zweiten Farben auf dem Bildschirm,
- Selektion einer der zweiten Farbflächen,
- automatische Verschiebung der selektierten zweiten Farbfläche in einen Bereich der ersten Farbfläche zur Erzeugung einer Farbkante.

11. Computerprogrammprodukt nach Anspruch 10, wobei die erste Farbfläche in einem zentralen Bereich eines Anzeigefensters angezeigt wird und wobei die zweiten Farbflächen in einem peripheren Bereich der ersten Farbfläche angezeigt werden.

12. Computerprogrammprodukt nach Anspruch 10 oder 11, wobei die ersten und zweiten Farbkoordinaten zu einem ersten Farbkoordinatensystem gehören und die Anzeige der ersten und zweiten Farbflächen auf dem Bildschirm auf einem zweiten Farbkoordinatensystem basiert und die ersten und zweiten Farbkoordinaten des ersten Farbkoordinatensystems in entsprechende erste und zweite Farbkoordinaten des zweiten Farbkoordinatensystems umgesetzt werden.

13. Computerprogrammprodukt nach Anspruch 12, wobei es sich bei dem ersten Farbkoordinatensystem um das CIELAB-Koordinatensystem und bei dem zweiten Farbkoordinatensystem um das RGB-System handelt.

14. Computerprogrammprodukt nach einem der vorhergehenden Ansprüche 10 bis 13, wobei die Auswahl von zweiten Farben mit zweiten Farbkoordinaten, die mit Bezug auf die ersten Farbkoordinaten ähnlich sind, basierend auf einem Ähnlichkeitsmaß erfolgt, welches mit einem vorgegebenen Schwellwert verglichen wird.

15. Computerprogrammprodukt nach Anspruch 14, wobei als Ähnlichkeitsmaß ein euklidischer Abstand zwischen den ersten und zweiten Farbkoordinaten in dem ersten Farbkoordinatensystem verwendet wird.

16. Computerprogrammprodukt nach Anspruch 14 oder 15, wobei das Ähnlichkeitsmaß neben dem Abstand der Farbkoordinaten weitere Produkteigenschaften umfasst.

17. Computerprogrammprodukt nach einem der vorhergehenden Ansprüche 10 bis 16, wobei die Selektion einer zweiten Farbfläche über eine graphische Benutzerschnittstelle erfolgt.

18. Computersystem mit
- Mitteln zur Eingabe von ersten Farbkoordinaten einer ersten Farbe,
- Mitteln zur Eingabe von zweiten Farben mit zweiten Farbkoordinaten, die mit Bezug auf die ersten Koordinaten ähnlich sind,
- Mitteln zur Anzeige einer ersten Farbfläche für die erste Farbe auf einem Bildschirm,
- Mitteln zur Anzeige von zweiten Farbflächen für die ausgewählten zweiten Farben auf dem Bildschirm,
- Mitteln zur Eingabe einer Selektion einer der zweiten Farbflächen,
- Mitteln zur automatischen Verschiebung der selektierten zweiten Farbfläche in einem Bereich der ersten Farbfläche zur Erzeugung einer Farbkante.

19. Computersystem nach Anspruch 18, wobei die erste Farbfläche in einem zentralen Bereich eines Anzeigefensters angezeigt wird und wobei die zweiten Farbflächen in einem peripheren Bereich der ersten Farbfläche angezeigt werden.

20. Computersystem nach Anspruch 18 oder 19, wobei die ersten und zweiten Farbkoordinaten zu einem ersten Farbkoordinatensystem gehören und die Anzeige der ersten und zweiten Farbflächen auf dem Bildschirm auf einem zweiten Farbkoordinatensystem basiert und die ersten und zweiten Farbkoordinaten des ersten Farbkoordinatensystems in entsprechende erste und zweite Farbkoordinaten des zweiten Farbkoordinatensystems umgesetzt werden.

21. Computersystem nach Anspruch 20, wobei es sich bei dem ersten Farbkoordinatensystem um das CIELAB-Koordinatensystem und bei dem zweiten Farbkoordinatensystem um das RGB-System handelt

22. Computersystem nach einem der vorhergehenden Ansprüche 18 bis 21, wobei die Auswahl von zweiten Farben mit zweiten Farbkoordinaten, die mit Bezug auf die ersten Farbkoordinaten ähnlich sind, basierend auf einem Ähnlichkeitsmaß erfolgt, welches mit einem vorgegebenen Schwellwert verglichen wird.

23. Computersystem nach Anspruch 22, wobei als Ähnlichkeitsmaß ein euklidischer Abstand zwischen den ersten und zweiten Farbkoordinaten in dem ersten Farbkoordinatensystem verwendet wird.

24. Computersystem nach Anspruch 22 oder 23, wobei das Ähnlichkeitsmaß neben dem Abstand der Farbkoordinaten weitere Produkteigenschaften umfasst.

25. Computersystem nach einem der vorhergehenden Ansprüche 18 bis 24, wobei die Selektion einer zweiten Farbfläche über eine graphische Benutzerschnittstelle erfolgt.
